(19) **Europäisches Patentamt / European Patent Office / Office européen des brevets**

(11) **EP 4 478 042 A1**

(12) **EUROPEAN PATENT APPLICATION**
published in accordance with Art. 153(4) EPC

(43) Date of publication:
**18.12.2024 Bulletin 2024/51**

(21) Application number: **22938965.5**

(22) Date of filing: **26.04.2022**

(51) International Patent Classification (IPC):
**G01N 30/02** (2006.01)  **G01N 30/06** (2006.01)
**G01N 30/64** (2006.01)  **G01N 31/16** (2006.01)

(52) Cooperative Patent Classification (CPC):
**G01N 30/02; G01N 30/06; G01N 30/64;
G01N 31/16**

(86) International application number:
**PCT/CN2022/089413**

(87) International publication number:
**WO 2023/206109 (02.11.2023 Gazette 2023/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **China Shenhua Coal to Liquid and Chemical Co.,
Ltd
Beijing 100011 (CN)**
• **Guo Neng Yulin Chemical Co., Ltd
Yulin, Shaanxi 719000 (CN)**

(72) Inventors:
• **ZHANG, Yachun**
Yulin, Shaanxi 719000 (CN)
• **BAI, Wenjuan**
Yulin, Shaanxi 719000 (CN)
• **LI, Chunlei**
Yulin, Shaanxi 719000 (CN)
• **HUANG, Qizhong**
Yulin, Shaanxi 719000 (CN)
• **GE, Xihui**
Yulin, Shaanxi 719000 (CN)

(74) Representative: **Bergenstråhle & Partners AB**
P.O. Box 17704
118 93 Stockholm (SE)

(54) **METHOD FOR DETERMINING OXALIC ACID CONTENT OF DIMETHYL OXALATE**

(57) A method for determining the content of oxalic acid in dimethyl oxalate, comprising the following steps: determining the content of total acid in a dimethyl oxalate sample; determining the content of nitric acid in the dimethyl oxalate sample; subtracting the content of nitric acid from the content of total acid, and the resulting value is the content of oxalic acid in the dimethyl oxalate sample. The method overcomes the difficulty of measuring two mixed acids separately, avoids the problem of high determination results of oxalic acid caused by the reaction of nitric acid impurities, which are also acidic substances, during titration, and eliminates the interference of nitric acid and solution base.

EP 4 478 042 A1

## Description

Technical Field

The invention relates to the technical field of detection, and in particular to a method for detecting the content of oxalic acid impurities in dimethyl oxalate.

Background of the invention

The polyglycolic acid (PGA) device adopts a non-petroleum process technology route. The polyglycolic acid products have excellent full degradation characteristics, excellent mechanical properties and high barrier properties, and are mainly used in medical sutures, medical stents, sanitary products, food packaging, tableware, etc. Wherein, dimethyl oxalate is an important intermediate raw material for the production of polyglycolic acid, so the composition of dimethyl oxalate has an extremely important influence on the process for polyglycolic acid and polyglycolic acid products.

However, dimethyl oxalate will undergo hydrolysis reaction to generate corresponding oxalic acid when it meets water, and oxalic acid has the following hazards to the production: 1) it has a corrosive effect on equipment pipelines, affecting the service life of equipment; 2) salt substances are generated after the equipment is corroded, and the salt will form scale in the equipment, causing blockage of the equipment and pipelines; 3) oxalic acid corrodes equipments and causes iron to enter PGA products in the form of ions, affecting the quality of PGA products. Therefore, strictly controlling the content of oxalic acid in dimethyl oxalate has become an important technological index.

The existing analysis method for the content of oxalic acid in dimethyl oxalate is mainly carried out by traditional acid-base titration, which has problems such as large errors, poor repeatability, and inaccurate results and the like.

SUMMARY OF THE INVENTION

The purpose of the present invention is to provide a method for determining the content of oxalic acid in dimethyl oxalate, aiming at eliminating the influence of other impurities in dimethyl oxalate on the determination result of oxalic acid, so as to obtain more accurate content of oxalic acid.

In order to achieve the purpose of the above-mentioned invention, the present invention provides a method for determining the content of oxalic acid in dimethyl oxalate, comprising the following steps:

> determining the content of total acid in a dimethyl oxalate sample;
> determining the content of nitric acid in the dimethyl oxalate sample; and
> subtracting the content of nitric acid from the content of total acid, and the resulting value is the content of oxalic acid in the dimethyl oxalate sample.

In some embodiments, the method for determining the content of total acid is to titrate the dimethyl oxalate sample, and calculate the content of total acid by the amount of titrant consumed when the first potential sudden jump point occurs.

In some embodiments, the method for determining the content of total acid is to titrate the dimethyl oxalate sample, and calculate the content of total acid by the amount of titrant consumed when the second potential sudden jump point occurs.

In some embodiments, the content of total acid is determined by a potentiometric titrator.

In some embodiments, the titrant is a solution of KOH in methanol.

In some embodiments, the content of nitric acid is determined by acid-base titration.

In some embodiments, the content of nitric acid is determined by ion chromatography.

In some embodiments, the method for determining the content of nitric acid by ion chromatography comprises:

> establishing a standard curve of 0-100 mg/L standard solutions of nitrate ion versus the corresponding conductivity peak areas;
> passing a dimethyl oxalate sample after digestion through an ion exchange column to separate nitrate ions in the dimethyl oxalate sample, and detecting the conductivity peak area of the nitrate ions; and
> calculating the content of nitric acid in the dimethyl oxalate sample according to the nitrate ion concentration corresponding to the obtained conductivity peak area on the standard curve.

In some embodiments, the concentrations of the standard solutions of nitrate ion are 6.25 mg/L, 12.50 mg/L, 25.00 mg/L, 50.00 mg/L, and 100.00 mg/L, respectively.

In some embodiments, the ion exchange column is an anion exchange column.

In some embodiments, the method for determining the content of oxalic acid in dimethyl oxalate comprises the following steps:

dispersing the dimethyl oxalate sample in a solvent to obtain a solution of dimethyl oxalate;
titrating the solution of dimethyl oxalate with a standard solution of KOH in methanol, and recording the volume of the consumed titrant ($V_{KOH}$) when the first potential sudden jump point occurs;
establishing a standard curve of 0-100 mg/L standard solutions of nitrate ion versus the corresponding conductivity peak areas;
passing the dimethyl oxalate sample after digestion through an ion exchange column to separate nitrate ions in the dimethyl oxalate sample, and detecting the conductivity peak area of the obtained nitrate ions;
recording the concentration of nitrate ion ($C_{HNO3}$) which corresponds to the obtained conductivity peak area on the standard curve, and calculating the content of nitric acid in the dimethyl oxalate sample ($\omega_{HNO3}$); and
calculating the content of oxalic acid in the dimethyl oxalate sample according to formula I;

$$\omega(\%) = \frac{\left( \dfrac{C_{KOH} \times V_{KOH}}{1000} - \dfrac{m \times \omega_{HNO_3}}{63} \right) \times 90.03}{m} \times 100$$

formula I

wherein, in the formula I:

$\omega$ (%) represents the mass percentage content of oxalic acid;
$C_{KOH}$ represents the concentration of the standard solution of KOH in methanol, in mol/L;
$V_{KOH}$ represents the volume of the standard solution of KOH in methanol consumed when the first potential sudden jump point occurs, in mL;
m is the mass of the dimethyl oxalate sample, in g;
$\omega_{HNO3}$ represents the content of nitric acid in the dimethyl oxalate sample, in %;
63 is the relative molecular mass of nitric acid; and
90.03 is the relative molecular mass of oxalic acid.

Compared with the prior art, the present invention has the following advantages:
the method for determining the content of oxalic acid in dimethyl oxalate provided by the present invention overcomes the difficulty of measuring two mixed acids separately, and is able to avoid the problem of high determination results of oxalic acid caused by the reaction of nitric acid impurities, which are also acidic substances, during titration. Furthermore, the determination method provided by the preswnt invention also solves the problem that the determination data of the content of oxalic acid varies greatly due to the non-obvious second potential sudden jump when determining oxalic acid in dimethyl oxalate. The determination method provided by the present invention is used to determine the content of oxalic acid in dimethyl oxalate, which can eliminate the interference of nitric acid and solution base, and the test results have better parallelism and higher accuracy.

Brief description of the drawings

Figure 1 is the E&dE/dV diagram of the standard solution of oxalic acid (1 mol/L) determined by potentiometric titrator, wherein the pH of the first potential sudden jump point is 4.17 and the pH of the second potential sudden jump point is 8.14.
Figure 2 is the E&dE/dV diagram of oxalic acid in a dimethyl oxalate sample determined by potentiometric titrator, wherein the pH of the first potential sudden jump point is 4.74 and the pH of the second potential sudden jump point is 7.54.
Figure 3 is the E&dE/dV diagram of the standard solution of nitric acid determined by potentiometric titrator, wherein the pH of the potential sudden jump point is 5.08.
Figure 4 is the standard curve of different concentrations of nitrate versus the corresponding conductivity.

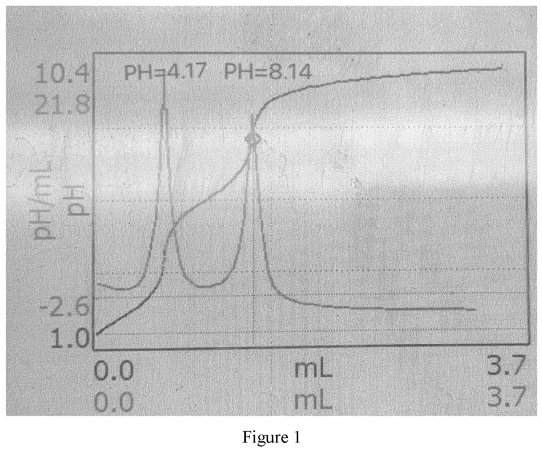

In Figures 1-3, the E&dE/dV diagrams refer to: plotting the titration volume with the potential of the indicated electrode, and plotting the titration volume with the first derivative of the potential of the indicated electrode against the titration volume. Wherein, E is the potential of the indicator electrode; V is the titration volume; dE/dV is the first derivative of the potential of the indicator electrode against the titration volume.

Detailed description of the invention

Oxalic acid is a binary weak acid with ionization constants Ka1 of $5.9 \times 10^{-2}$ and Ka2 of $6.4 \times 10^{-5}$. Usually, when determining oxalic acid in a sample, an alkaline standard solution is used for titration to obtain the content of oxalic acid by the classical acid-base titration. Wherein, the first hydrogen ion is dissociated by oxalic acid when the pH shows the first sudden jump, and the second hydrogen ion is dissociated by oxalic acid when the pH shows the second sudden jump. In an example that using the standard solution of KOH in methanol as the titrant, the mass percentage content of oxalic acid in the sample is calculated according to formula II:

$$\omega(\%) = \frac{\dfrac{C_{KOH} \times V_{KOH}}{1000} \times 90.03}{2 \times m} \times 100$$

formula II

wherein, in the formula II:

$V_{KOH}$ represents the volume of the standard solution of KOH in methanol consumed by titrating the sample, in mL;
$C_{KOH}$ represents the concentration of the standard solution of KOH in methanol, in mol/L;
$\omega$ represents the mass percentage content of oxalic acid;
m represents the mass of the sample, in g; and
90.03 represents the relative molecular mass of oxalic acid.

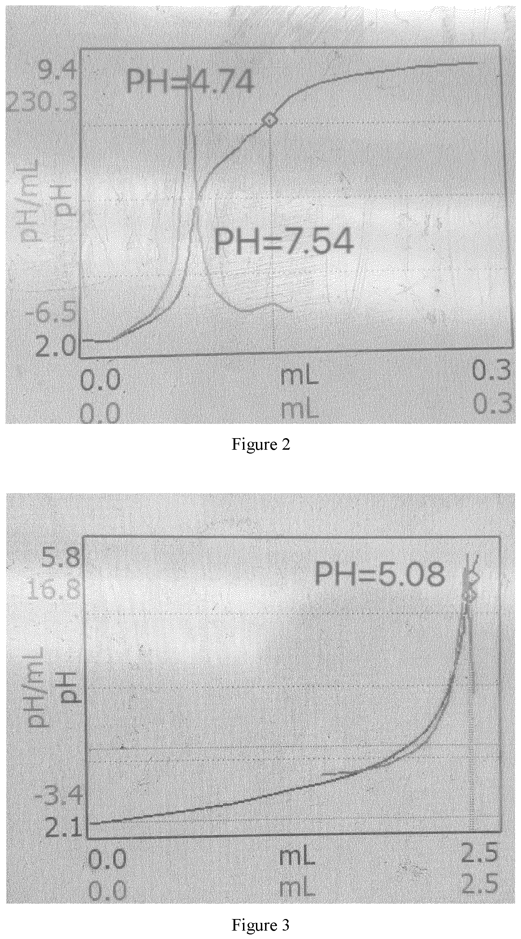

However, during the study, the inventors of the present invention found that the pH of the first potential sudden jump point (i.e., the first pH sudden jump) of the standard solution of oxalic acid was 4.17, and the pH of the second potential sudden jump point (i.e., the second pH sudden jump) was 8.14 (as shown in Figure 1); while when the oxalic acid in the dimethyl oxalate sample was determined, the pH of the first potential sudden jump point was 4.74, and the pH of the second potential sudden jump point was 7.54 (as shown in Figure 2). It can be seen that during the determination of oxalic acid in dimethyl oxalate sample, both the first potential sudden jump point and the second potential sudden jump point shifted. In this regard, the inventors of the present invention continued to study and found that when the E&dE/dV of the standard solution of nitric acid was determined by potentiometric titrator, the pH of the potential sudden jump point was 5.08 (as shown in Figure 3). Therefore, it is believed that due to the influence of nitric acid in the dimethyl oxalate sample, the first potential sudden jump point and the second potential sudden jump point of oxalic acid will shift to the potential sudden jump point of nitric acid (5.08). It has been confirmed by study that the main impurities in the dimethyl oxalate product are methanol, methyl formate, water, nitric acid, oxalic acid, etc.; wherein, nitric acid and oxalic acid are both acid substances, so when the content of oxalic acid is detected by titration, nitric acid will also participate in the reaction, which will lead to a high determination result of the content of oxalic acid. In order to solve this problem, the present invention provides a method for determining the content of oxalic acid in dimethyl oxalate, comprising the following steps:

(1) determining the content of total acid in a dimethyl oxalate sample;
(2) determining the content of nitric acid in the dimethyl oxalate sample; and
(3) subtracting the content of nitric acid from the content of total acid, and the resulting value is the content of oxalic acid in the dimethyl oxalate sample.

Specifically, in step (1), the dimethyl oxalate sample comprises a finished product of dimethyl oxalate and a process sample of dimethyl oxalate. Wherein, the finished product of dimethyl oxalate refers to a dimethyl oxalate product with a content of dimethyl oxalate of 99.5% or more. The process sample of dimethyl oxalate refers to a sample containing dimethyl oxalate obtained in the intermediate process of producing or developing dimethyl oxalate products.

The content of total acid refers to the sum of the content of oxalic acid and the content of nitric acid in the dimethyl oxalate sample.

In some embodiments, the content of total acid is determined by a potentiometric titrator. Preferably, the potentiometric titrator is a high-precision potentiometric titrator, such as a potentiometric titrator with a minimum liquid addition amount of 0.005 mL, a liquid addition error of ≤0.15%, and a determination potential range of ±1000 mV.

Two pH sudden jumps are generated when oxalic acid is titrated by titration. Accordingly, when oxalic acid is titrated by potentiometric titration (for example, using a potentiometric titrator), the first pH sudden jump is the first potential sudden jump point, and the second pH sudden jump is the second potential sudden jump point.

In some embodiments, the method for determining the content of total acid is to titrate the dimethyl oxalate sample, and calculate the content of total acid by the amount of titrant consumed when the second potential sudden jump point occurs.

In some embodiments, the method for determining the content of total acid is to titrate the dimethyl oxalate sample, and calculate the content of total acid by the amount of titrant consumed when the first potential sudden jump point occurs. Meanwhile, the inventors of the present invention further found during the study that the first potential sudden jump point and the second potential sudden jump point of the standard solution of oxalic acid are both obvious (as shown in Figure 1); while when determining oxalic acid in dimethyl oxalate sample, the second potential sudden jump point becomes less obvious (as shown in Figure 2), which will cause problems such as difficulty in reading and large differences in determination data when determining oxalic acid in dimethyl oxalate sample. After study, it has been found that the cause of this problem is the interference of the solution base. In order to solve this problem, the present invention uses the value calculated by the amount of titrant consumed when the first potential sudden jump point occurs as the result of the content of total acid in the dimethyl oxalate sample, and after repeated verification, compared with using the value calculated by the amount of titrant consumed when the second potential sudden jump point occurs as the result of the content of total acid in the dimethyl oxalate sample, it has better parallelism and smaller error, which further improves the accuracy of the determination of the content of oxalic acid in the dimethyl oxalate sample.

In some embodiments, the titrant is a solution of KOH in methanol, that is, a solution formed by dispersing KOH in methanol. In some specific embodiments, in order to facilitate titration and calculation, the concentration of KOH in the solution of KOH in methanol is 0.1 mol/L.

In step (2), when the oxalic acid in the dimethyl oxalate sample is directly determined by titration, the result will be interfered by nitric acid. Therefore, the present invention adopts the method that first determining the content of total acid and then subtracting the content of nitric acid to obtain an accurate result of the content of oxalic acid, so it is necessary to determine the content of nitric acid. In some embodiments, the content of nitric acid is determined by acid-base titration or ion chromatography, preferably ion chromatography, which is more accurate. The separation of nitrate ions in dimethyl oxalate sample by ion chromatography may be carried out by methods and materials known in the art, and the methods use the different binding abilities of nitrate ions with ion exchange columns to separate nitrate ions in dimethyl oxalate sample.

In some embodiments, the separation of nitrate ions from dimethyl oxalate samples by ion chromatography comprises the following steps:

> (i) establishing a standard curve of 0-100 mg/L standard solutions of nitrate ion versus the corresponding conductivity peak areas;
> (ii) passing a dimethyl oxalate sample after digestion through an ion exchange column to separate nitrate ions in the dimethyl oxalate sample, and detecting the conductivity peak area of the nitrate ions; and
> (iii) calculating the content of nitric acid in the dimethyl oxalate sample according to the nitrate ion concentration corresponding to the obtained conductivity peak area on the standard curve.

In some embodiments, in step (i), the standard curve uses the nitrate ion concentration as the horizontal axis and the conductivity peak area as the vertical axis.

In some embodiments, the specific concentrations of 0-100 mg/L standard solutions of nitrate ion are 6.25 mg/L, 12.50 mg/L, 25.00 mg/L, 50.00 mg/L, and 100.00 mg/L, respectively.

In some embodiments, the ion exchange column is an anion exchange column. In a specific embodiment, the anion exchange column is a Thermo Fisher AS23 type anion column, which mainly includes a guard column and an anion separation column, the anion analysis column uses anion exchange resin as the stationary phase and eluent as the mobile phase.

In step (ii), the method of digestion of the dimethyl oxalate sample may use conventional methods in the art, the purpose of which is to convert various elements in the dimethyl oxalate sample into free states for anion exchange to determine the content of nitrate ions. In some embodiments, the digestion is to mix the dimethyl oxalate sample with hydrogen peroxide, and then heat and dry it. Preferably, the dimethyl oxalate sample is mixed with hydrogen peroxide at a temperature of 70°C, kept the temperature for 1.5 hours, and then heated to 80°C for drying. The substance obtained after the digestion is re-added with water to make up to volume to obtain a solution for passing through the anion exchange column.

In step (iii), the content of nitric acid may be calculated according to formula III:

$$\omega_{HNO_3} = \frac{C_{HNO_3} \times V}{1000 \times 1000 \times m} \times 100$$

formula III

wherein, in the formula III:

$\omega_{HNO3}$ represents the content of nitric acid in the dimethyl oxalate sample, in %;
$C_{HNO3}$ represents the nitrate ion concentration corresponding to the conductivity peak area of nitrate ions detected by ion chromatography on the standard curve, in mg/L;
m represents the mass of the dimethyl oxalate sample, in g;
V is the volume of the dimethyl oxalate sample after being digested and made up to volume in step (ii), in mL.

In step (3), in some embodiments, the method for calculating the content of oxalic acid in the dimethyl oxalate sample by subtracting the content of nitric acid from the content of total acid is as follows: the molar amount of the consumed titrant is calculated according to the volume of the titrant consumed during the determination of the content of total acid, and the molar amount of nitric acid is calculated according to the content of nitrate ions, the molar amount of oxalic acid is obtained by subtracting the molar amount of nitric acid from the molar amount of the consumed titrant, then multiplied by the relative molecular mass of oxalic acid, the obtained product is divided by the mass of the dimethyl oxalate sample, and finally multiplied by 100, then the mass percentage content of oxalic acid in the dimethyl oxalate sample is obtained. In an example that using the standard solution of KOH in methanol as the titrant, the content of oxalic acid is calculated as shown in Formula I.

$$\omega(\%) = \frac{\left( \dfrac{C_{KOH} \times V_{KOH}}{1000} - \dfrac{m \times \omega_{HNO_3}}{63} \right) \times 90.03}{m} \times 100$$

formula I

wherein, in the formula I:

$\omega(\%)$ is the mass percentage content of oxalic acid;
$C_{KOH}$ represents the concentration of the standard solution of KOH in methanol, in mol/L;
$V_{KOH}$ is the volume of the standard solution of KOH in methanol consumed when the first potential sudden jump point occurs, in mL;
m represents the mass of the dimethyl oxalate sample, in g;
$\omega_{HNO3}$ represents the content of nitric acid in the dimethyl oxalate sample, in %;
63 is the relative molecular mass of nitric acid; and
90.03 is the relative molecular mass of oxalic acid.

As one of the preferred specific embodiments of the present invention, the method for determining the content of oxalic acid in a dimethyl oxalate sample has following steps:

S1. dispersing the dimethyl oxalate sample in a solvent to obtain a solution of dimethyl oxalate;
S2. titrating the solution of dimethyl oxalate with a standard solution of KOH in methanol, and recording the volume of the consumed titrant ($V_{KOH}$) when the first potential sudden jump point occurs;
S3. establishing a standard curve of 0-100 mg/L standard solutions of nitrate ion versus the corresponding conductivity peak areas;
S4. passing the dimethyl oxalate sample after digestion through an ion exchange column to separate nitrate ions in the dimethyl oxalate sample, and detecting the conductivity peak area of the obtained nitrate ions;
S5. recording the concentration of nitrate ion ($C_{HNO3}$) which corresponds to the obtained conductivity peak area on the standard curve, and calculating the content of nitric acid in the dimethyl oxalate sample ($\omega_{HNO3}$); and
S6. calculating the content of oxalic acid in the dimethyl oxalate sample according to formula I;

$$\omega(\%) = \frac{\left(\dfrac{C_{KOH} \times V_{KOH}}{1000} - \dfrac{m \times \omega_{HNO_3}}{63}\right) \times 90.03}{m} \times 100$$

formula I

wherein, in the formula I:

$\omega$ (%) represents the mass percentage content of oxalic acid;

$C_{KOH}$ represents the concentration of the standard solution of KOH in methanol, in mol/L;

$V_{KOH}$ represents the volume of the standard solution of KOH in methanol consumed when the first potential sudden jump point occurs, in mL;

m represents the mass of the dimethyl oxalate sample, in g;

$\omega_{HNO3}$ represents the content of nitric acid in the dimethyl oxalate sample, in %;

63 is the relative molecular mass of nitric acid; and

90.03 is the relative molecular mass of oxalic acid.

In this preferred specific embodiment, not only the interference of nitric acid on oxalic acid during the determination, but also the interference of the solution base is eliminated, so that the determination results of the content of oxalic acid in the dimethyl oxalate sample have better parallelism and the accuracy is further improved. At the same time, it can be understood that in the present invention, the units of the parameters shown in Formula I, Formula II and Formula III may be converted to international units or subunits representing the same parameters, for example, mol/L may be converted to mmol/L, mL may be converted to L, etc., and Formula I, Formula II and Formula III may be adjusted accordingly according to the specific conversion situation.

In order to enable the above implementation details and operations of the invention clearly understood by those skilled in the art, and to significantly reflect the improved performance of the method for determining the content of oxalic acid in dimethyl oxalate in the examples of the present invention, the above technical solutions are illustrated by multiple examples below.

The experimental methods used in the following examples are conventional methods unless otherwise specified.

Materials, reagents, etc. used in the following examples can all be obtained from commercial sources unless otherwise specified.

**Example 1**

This example provides the determination of trace nitric acid in dimethyl oxalate, an intermediate product of the polyglycolic acid plant of Yulin Company, by ion chromatography.

1. Reagents and materials

(1) Hydrogen peroxide: analytical grade;

(2) Water: ultrapure water;

(3) Standard solutions of nitrate ion: standard solutions with concentrations of 6.25 mg/L, 12.50 mg/L, 25.00 mg/L, 50.00 mg/L, and 100.00 mg/L respectively;

(4) Eluent: preparing 2L of eluent with 4.5 mmol $Na_2CO_3$+0.8 mmol $NaHCO_3$.

2. Instruments and equipments (commercially available)

(1) The ion chromatography is composed of eluent storage bottle, delivery pump, injection valve, guard and separation column, anion suppressor, conductivity detector, and chromatographic workstation, etc.

| Parameters of ion chromatography | |
| --- | --- |
| Run time | 30 min |
| Pump flow rate | 1.00 mL/min |
| Flush factor | 5 times |
| Injector delivery speed | 4.00 mL/min |

(continued)

| Parameters of ion chromatography | |
|---|---|
| Injection volume | 25 μL |
| Conductivity detector | ECD-1 |
| Cell temperature | 35°C |
| Column temperature | 30°C |
| Suppression type | AERS-4nm |
| Suppression current | 25 mA |

(2) Analytical balance: sensitivity of 0.1 mg.

(3) Guard column and separation column: the guard column and the separation column are both resin-filled columns, the models are Thermo Fisher AG23 type anion column (4×50 mm) and Thermo Fisher AS23 type anion column (4×250 mm).

3. Analysis steps

(1) Drawing of standard curve:

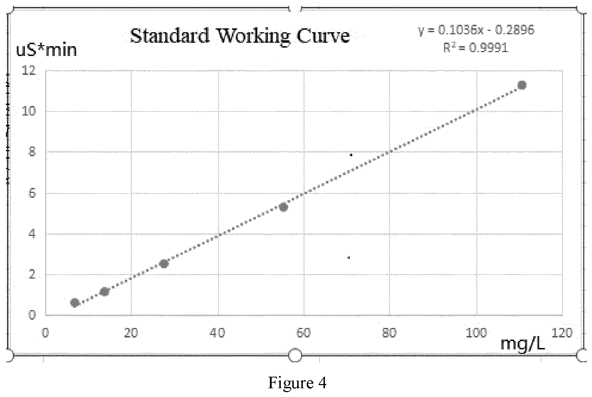

Standard solutions of nitrate ion with concentrations of 6.25 mg/L, 12.50 mg/L, 25.00 mg/L, 50.00 mg/L and 100.00 mg/L were prepared in five 50 mL volumetric flasks respectively. The conductivity peak areas of nitrate ion corresponding to each standard solution of nitrate ion were determined by the above ion chromatography, and a working curve was drawn with nitrate ion concentration as the horizontal axis and conductivity peak area as the vertical axis (as shown in Figure 4).

(2) Sample determination

Digestion to eliminate base interference: Dimethyl oxalate sample was taken, weighed 2 g and placed in a 50 mL beaker, added with 4 mL of water, the mix was heated at 70°C to a homogeneous phase and kept the temperature for 0.5 h, then 3 mL of hydrogen peroxide was added, the temperature was kept for 1.5 h, and the obtained solution was evaporated to dryness at 80°C.

The evaporated material in the beaker was washed with ultrapure water, transferred to a volumetric flask, and diluted to the scale (50 mL) with water, and the result $C_{HNO3}$ was read.

The content of nitric acid ($\omega_{HNO3}$) in the sample was determined in mass percentage and was calculated according to formula III.

The determination results are shown in Table 1.

Table 1. The contents of nitric acid in the dimethyl oxalate (DMO) samples determined by ion chromatography

| Sample Nos. | DMO (g) | NO3⁻ (mg/L) | HNO₃ (%) |
|---|---|---|---|
| 1 | 2.0034 | 3.1318 | 0.0078 |
| 2 | 2.0104 | 3.2033 | 0.0080 |
| 3 | 2.0087 | 3.1969 | 0.0080 |
| 4 | 2.0004 | 3.1056 | 0.0078 |
| Average value | 2.0057 | 3.1594 | 0.0079 |
| Standard deviation(%) | - | - | 0.0001 |

It can be seen from Table 1 that the dimethyl oxalate sample contains nitric acid impurities. At the same time, the data of the contents of nitric acid obtained by determination can be used in the subsequent calculation of the content of oxalic acid.

**Example 2**

This example provides methods for calculating the content of total acid in a dimethyl oxalate sample by the first potential sudden jump and the second potential sudden jump, respectively.

(11) The dimethyl oxalate sample was weighed in a clean and dry beaker, 50 mL of an organic solvent was add to completely dissolve the sample to obtain a solution of dimethyl oxalate. Using a potentiometric titrator, the solution of dimethyl oxalate was titrated using 0.1 mol/L solution of KOH in methanol (standard solution) as titrant, when the first potential sudden jump point occurred, the volume of the solution of KOH in methanol consumed (Vi) at this time was recorded.

(12) The titration was continued, and when the second potential sudden jump point occurred, the volume of the solution of KOH in methanol consumed ($V_2$) was recorded.

The first potential sudden jump pH, the second potential sudden jump pH, the volumes of the titrant consumed at the corresponding time points, and the calculated content of total acid are shown in Table 2. Wherein, the calculation formula of the content of total acid is shown in formula I. When the calculation uses the occurrence of the first potential sudden jump point as the calculation basis of the content of total acid, $V_1$ in this example is used as the $V_{KOH}$ in formula I; when the calculation uses the occurrence of the second potential sudden jump point as the calculation basis of the content of total acid, $V_2$ in this example is used as the $V_{KOH}$ in formula I.

Table 2 Results of the content of total acid in the dimethyl oxalate samples

| Sample Nos. | Dimethyl oxalate (g) | $V_1$ (mL) | First potential sudden jump pH | $V_2$ (mL) | Second potential sudden jump pH | Contents of total acid calculated as $V_2$ (%) | Contents of total acid calculated as $V_1$ (%) |
|---|---|---|---|---|---|---|---|
| 1 | 5.0415 | 0.0545 | 4.7880 | 0.0706 | 7.4010 | 0.0079 | 0.0122 |
| 2 | 5.0223 | 0.0610 | 4.7510 | 0.1160 | 7.6470 | 0.0131 | 0.0137 |
| 3 | 5.0283 | 0.0540 | 4.7320 | 0.1060 | 7.4880 | 0.0119 | 0.0121 |
| 4 | 5.0248 | 0.0680 | 4.6770 | 0.1250 | 7.6410 | 0.0141 | 0.0153 |
| Average value | 5.0292 | 0.0594 | 4.7370 | 0.1044 | 7.5443 | 0.0117 | 0.0134 |
| Standard deviation (%) | | | | | | 0.0021 | 0.0012 |

It can be seen from Table 2 that, compared with the results of the content of total acid in the dimethyl oxalate samples calculated by recording the amount of titrant consumed when the second potential sudden jump point occurs, the standard deviation of the contents of total acid in the dimethyl oxalate sample calculated by recording the amount of titrant consumed when the first potential sudden jump point occurs is smaller, thus the results of the content of total acid in the dimethyl oxalate samples calculated by recording the amount of titrant consumed when the first potential sudden jump point occurs are more accurate.

**Example 3**

This example provides a spike-and-recovery experiment of the content of oxalic acid obtained based on the content of total acid in the dimethyl oxalate sample calculated by recording the amount of titrant consumed ($V_1$)when the first potential sudden jump point occurs.

1. Determination process

Two samples of dimethyl oxalate with known content of oxalic acid were taken at the same weight, added with 104 μg of oxalic acid to each of them, and the content of oxalic acid of the two samples was determined respectively under the same conditions according to the steps of Example 1 and Example 2 (calculating the content of total acid in the dimethyl oxalate sample by recording the amount of titrant consumed when the first potential sudden jump point occurred).

2. Calculation of the spiked recovery rate

spiked recovery rate = (determined value of spiked sample - determined value of sample) ÷ spiked amount $\times$ 100

The results of the spike-and-recovery experiment are shown in Table 3.

Table 3. Results of the spike-and-recovery experiment in which the content of oxalic acid in the dimethyl oxalate samples was calculated by $V_1$

| Known content of oxalic acid in sample (μg) | Added content of oxalic acid (μg) | Determined content of oxalic acid (μg) | Recovery rate (%) | Average recovery rate (%) | RSD (%) |
|---|---|---|---|---|---|
| 134 | 104 | 239 | 100.96 | 102.40 | 1.24 |
| | | 241 | 102.88 | | |
| | | 242 | 103.85 | | |
| | | 240 | 101.92 | | |

It can be seen from Table 3 that the accuracy and reliability of the results of the content of oxalic acid in the dimethyl oxalate sample detected by the method of the present invention can meet the professional requirements of analysis (95%-105%).

**Example 4**

This example provides the determination of the content of oxalic acid in dimethyl oxalate, an intermediate product of the polyglycolic acid device of Yulin Company.

The dimethyl oxalate sample used in Example 1 was weighed in a clean and dry beaker, 50 mL of an organic solvent was add to completely dissolve the sample to obtain a solution of dimethyl oxalate. Using a potentiometric titrator, the solution of dimethyl oxalate was titrated using 0.1 mol/L solution of KOH in methanol (standard solution) as titrant, when the first potential sudden jump point occurred, the volume of the solution of KOH consumed ($V_{KOH}$) at this time was recorded.

Combined with the average value of 0.0079% of results of the content of nitric acid determined in Example 1, the content of oxalic acid in the sample was calculated according to Formula I. The results are shown in Table 4.

Table 4. Determination result of the content of oxalic acid in the dimethyl oxalate samples

| DMO (g) | $V_{KOH}$ (mL) | $C_{KOH}$ (mol/L) | Content of nitric acid (%) | Content of oxalic acid (%) |
|---|---|---|---|---|
| 5.0292 | 0.0594 | 0.1256 | 0.0079 | 0.0021 |

The above-mentioned examples only express several embodiments of the present invention, and the description is relatively specific and detailed, but it should not be understood as limiting the patent scope of the present invention. It should be noted that for ordinary technicians in this field, several modifications and improvements can be made without departing from the concept of the present invention, which all belong to the protection scope of the present invention. Therefore, the protection scope of the patent of the present invention shall be based on the attached claims.

**Claims**

1.    A method for determining the content of oxalic acid in dimethyl oxalate, wherein, the method comprises the following steps:

determining the content of total acid in a dimethyl oxalate sample;
determining the content of nitric acid in the dimethyl oxalate sample; and
subtracting the content of nitric acid from the content of total acid, and the resulting value is the content of oxalic acid in the dimethyl oxalate sample.

2.    The determination method according to claim 1, wherein, the method for determining the content of total acid is to titrate the dimethyl oxalate sample, and calculate the content of total acid by the amount of titrant consumed when the first potential sudden jump point occurs.

3.    The determination method according to claim 1, wherein, the method for determining the content of total acid is to titrate the dimethyl oxalate sample, and calculate the content of total acid by the amount of titrant consumed when the second potential sudden jump point occurs.

4. The determination method according to any one of claims 1 to 3, wherein, the content of total acid is determined by a potentiometric titrator.

5. The determination method according to any one of claims 1 to 3, wherein, the titrant is a solution of KOH in methanol.

6. The determination method according to any one of claims 1 to 5, wherein, the content of nitric acid is determined by acid-base titration or ion chromatography.

7. The determination method according to claim 6, wherein, the method for determining the content of nitric acid by ion chromatography comprises:

> establishing a standard curve of 0-100 mg/L standard solutions of nitrate ion versus the corresponding conductivity peak areas;
> passing a dimethyl oxalate sample after digestion through an ion exchange column to separate nitrate ions in the dimethyl oxalate sample, and detecting the conductivity peak area of the nitrate ions; and
> calculating the content of nitric acid in the dimethyl oxalate sample according to the nitrate ion concentration corresponding to the obtained conductivity peak area on the standard curve.

8. The determination method according to claim 7, wherein, the concentrations of the standard solutions of nitrate ion are 6.25 mg/L, 12.50 mg/L, 25.00 mg/L, 50.00 mg/L, and 100.00 mg/L, respectively.

9. The determination method according to claim 7, wherein, the digestion is to convert each element in the dimethyl oxalate sample into free state.

10. The determination method according to claim 9, wherein, the digestion comprises: mixing the dimethyl oxalate sample with hydrogen peroxide, then heating and drying the mixture.

11. The determination method according to claim 7, wherein, the ion exchange column is an anion exchange column.

12. The determination method according to claim 11, wherein, the anion exchange column uses anion exchange resin as the stationary phase and eluent as the mobile phase; the eluent is a mixed solution of sodium carbonate and sodium bicarbonate.

13. The determination method according to any one of claims 7 to 12, wherein, the content of nitric acid in the dimethyl oxalate sample is calculated according to formula III:

$$\omega_{HNO_3} = \frac{C_{HNO_3} \times V}{1000 \times 1000 \times m} \times 100$$

$$\text{formula III}$$

wherein, in the formula III:

> $\omega_{HNO3}$ represents the content of nitric acid in the dimethyl oxalate sample, in %;
> $C_{HNO3}$ represents the nitrate ion concentration corresponding to the conductivity peak area of nitrate ions detected by ion chromatography on the standard curve, in mg/L;
> m represents the mass of the dimethyl oxalate sample, in g;
> V is the volume of the dimethyl oxalate sample after being digested and made up to volume, in mL.

14. The determination method according to any one of claims 1 to 13, wherein, the method comprises the following steps:

> dispersing the dimethyl oxalate sample in a solvent to obtain a solution of dimethyl oxalate;
> titrating the solution of dimethyl oxalate with a standard solution of KOH in methanol, and recording the volume of the consumed titrant ($V_{KOH}$) when the first potential sudden jump point occurs;
> establishing a standard curve of 0-100 mg/L standard solutions of nitrate ion versus the corresponding conductivity peak areas;

passing the dimethyl oxalate sample after digestion through an ion exchange column to separate nitrate ions in the dimethyl oxalate sample, and detecting the conductivity peak area of the obtained nitrate ions;

recording the concentration of nitrate ion ($C_{HNO3}$) which corresponds to the obtained conductivity peak area on the standard curve, and calculating the content of nitric acid in the dimethyl oxalate sample $\omega_{HNO3}$; and

calculating the content of oxalic acid in the dimethyl oxalate sample according to formula I;

$$\omega(\%) = \frac{\left(\dfrac{C_{KOH} \times V_{KOH}}{1000} - \dfrac{m \times \omega_{HNO_3}}{63}\right) \times 90.03}{m} \times 100$$

formula I

wherein, in the formula I,

$\omega$ (%) represents the mass percentage content of oxalic acid;

$C_{KOH}$ represents the concentration of the standard solution of KOH in methanol, in mol/L;

$V_{KOH}$ represents the volume of the standard solution of KOH in methanol consumed when the first potential sudden jump point occurs, in mL;

m represents the mass of the dimethyl oxalate sample, in g;

$\omega_{HNO3}$ represents the content of nitric acid in the dimethyl oxalate sample, in %;

63 is the relative molecular mass of nitric acid; and

90.03 is the relative molecular mass of oxalic acid.

Figure 1

Figure 2

Figure 3

Figure 4

## INTERNATIONAL SEARCH REPORT

| | International application No. |
|---|---|
| | **PCT/CN2022/089413** |

**A.    CLASSIFICATION OF SUBJECT MATTER**

G01N 30/02(2006.01)i;  G01N 30/06(2006.01)i;  G01N 30/64(2006.01)i;  G01N 31/16(2006.01)i

According to International Patent Classification (IPC) or to both national classification and IPC

**B.    FIELDS SEARCHED**

Minimum documentation searched (classification system followed by classification symbols)

G01N30; G01N31

Documentation searched other than minimum documentation to the extent that such documents are included in the fields searched

Electronic data base consulted during the international search (name of data base and, where practicable, search terms used)

WPABSC; CNTXT; CJFD; ENTXTC: 硝酸, 草酸二甲酯, 滴定, 草酸, 离子色谱, oxalic acid, dimethyl oxalate, nitric acid, ion chromatograph, IC, titrat+

**C.    DOCUMENTS CONSIDERED TO BE RELEVANT**

| Category* | Citation of document, with indication, where appropriate, of the relevant passages | Relevant to claim No. |
|---|---|---|
| X | 何艳等 (HE, Yan et al.). "草酸二甲酯合成装置中稀硝酸回收改造及其对系统的影响 (Reconstruction of Dilute Nitric Acid Recovery in Dimethyl Oxalate Synthesis Unit and Its Influence on the System)" 化工管理 (*Chemical Enterprise Management*), No. 25, 01 September 2021 (2021-09-01), pp. 162-163 | 1-5 |
| Y | 何艳等 (HE, Yan et al.). "草酸二甲酯合成装置中稀硝酸回收改造及其对系统的影响 (Reconstruction of Dilute Nitric Acid Recovery in Dimethyl Oxalate Synthesis Unit and Its Influence on the System)" 化工管理 (*Chemical Enterprise Management*), No. 25, 01 September 2021 (2021-09-01), pp. 162-163 | 6-14 |
| Y | CN 103149295 A (CHINA TOBACCO FUJIAN INDUSTRIAL CO., LTD.) 12 June 2013 (2013-06-12) description, paragraphs 6-9 | 6-14 |
| Y | CN 102798681 A (HONGYUNHONGHE TOBACCO (GROUP) CO., LTD.) 28 November 2012 (2012-11-28) description, paragraphs 8-19 | 6-14 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 January 2023** | **16 January 2023** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| | International application No. |
|---|---|
| | **PCT/CN2022/089413** |

**C.    DOCUMENTS CONSIDERED TO BE RELEVANT**

| Category* | Citation of document, with indication, where appropriate, of the relevant passages | Relevant to claim No. |
|---|---|---|
| Y | JP 2005164289 A (NATIONAL INSTITUTE OF ADVANCED INDUSTRIAL & TECHNOLOGY) 23 June 2005 (2005-06-23)<br>      description, paragraph 5 | 6-14 |
| A | CN 1165809 A (MEI YONGQUAN) 26 November 1997 (1997-11-26)<br>      entire document | 1-14 |
| A | JP 5742654 A (UBE INDUSTRIES) 10 March 1982 (1982-03-10)<br>      entire document | 1-14 |
| A | CN 111855650 A (QINGDAO UNIVERSITY OF SCIENCE AND TECHNOLOGY) 30 October 2020 (2020-10-30)<br>      entire document | 1-14 |
| A | US 2017267615 A1 (SHANGHAI WUZHENG ENGINEERING TECHNOLOGY CO., LTD) 21 September 2017 (2017-09-21)<br>      entire document | 1-14 |

Form PCT/ISA/210 (second sheet) (January 2015)

**INTERNATIONAL SEARCH REPORT**
Information on patent family members

International application No.

**PCT/CN2022/089413**

| Patent document cited in search report | | | Publication date (day/month/year) | Patent family member(s) | | | Publication date (day/month/year) |
|---|---|---|---|---|---|---|---|
| CN | 103149295 | A | 12 June 2013 | None | | | |
| CN | 102798681 | A | 28 November 2012 | None | | | |
| JP | 2005164289 | A | 23 June 2005 | None | | | |
| CN | 1165809 | A | 26 November 1997 | None | | | |
| JP | 5742654 | A | 10 March 1982 | ZA | 815559 | B | 25 August 1982 |
| | | | | IN | 154442 | B | 27 October 1984 |
| | | | | ZA | 8105559 | B | 25 August 1982 |
| | | | | JP | S5742654 | A | 10 March 1982 |
| CN | 111855650 | A | 30 October 2020 | None | | | |
| US | 2017267615 | A1 | 21 September 2017 | CA | 2951165 | A1 | 10 December 2015 |
| | | | | WO | 2015184677 | A1 | 10 December 2015 |
| | | | | SA | 516380431 | B1 | 02 August 2020 |
| | | | | RU | 2659069 | C1 | 28 June 2018 |

Form PCT/ISA/210 (patent family annex) (January 2015)